# EUROPÄISCHE PATENTSCHRIFT

(11) **EP 3 684 662 B1**
(45) Veröffentlichungstag und Bekanntmachung des Hinweises auf die Patenterteilung: **01.06.2022**
(21) Anmeldenummer: 18755776.4
(22) Anmeldetag: 10.08.2018
(51) Int. Cl.: B60T 11/22, B60T 11/26

(54) **BREMSFLÜSSIGKEITSBEHÄLTER FÜR HYDRAULISCHEN BREMSAKTOR VON FAHRZEUGEN**
BRAKE FLUID RESERVOIR FOR A HYDRAULIC BRAKE ACTUATOR ON VEHICLES
RÉSERVOIR DE LIQUIDE DE FREIN POUR ACTIONNEUR HYDRAULIQUE DE FREIN DE VÉHICULES

(30) Priorität: 21.09.2017 ES 201731138
(43) Veröffentlichungstag der Anmeldung: 29.07.2020
(73) Patentinhaber: Robert Bosch GmbH, 70442 Stuttgart (DE)
(72) Erfinder: MOLTO RUIZ, Andres, 08520 Les Franqueses del Valles (Barcelona) (ES); WEH, Andreas, 87477 Sulzberg (DE); GANDIA VERGE, Carles, 60300 Senlis (FR)
(86) Internationale Anmeldenummer: PCT/EP2018/071776
(87) Internationale Veröffentlichungsnummer: WO 2019/057391

(56) Entgegenhaltungen:
- EP-A1- 2 641 799
- DE-A1- 1 455 988
- DE-A1- 4 115 063
- FR-A1- 2 017 041
- FR-A1- 2 936 476
- US-A1- 2006 157 141
- US-A1- 2007 009 321
- US-A1- 2007 125 080

## Beschreibung

### Gebiet der Erfindung

Die vorliegende Erfindung gehört zum Fachgebiet der hydraulischen Bremsaktorenvon Fahrzeugen und, genauer gesagt, der Bremsflüssigkeitsbehälter, die an das Hydraulikmodul des Bremsaktors gekoppelt werden. Die Erfindung betrifft insbesondere einen Bremsflüssigkeitsbehälter für einen hydraulischen Bremsaktor von Fahrzeugen mit einer an der unteren Basis des Behälters in Längsrichtung zentrierten mechanischen Verankerung zur Befestigung am Hydraulikmodul, der eine Mehrzahl von Nippeln zum Anschluss an das Hydraulikmodul aufweist, die ein Drehmoment auf den Behälter in Bezug auf die mechanische Verankerung erzeugen. Außerdem weist der Behälter eine Ausgleichsdichtung auf, die ein zusätzliches Drehmoment auf den Behälter in Bezug auf die mechanische Verankerung erzeugt, welches das durch die Nippel zum Anschluss an das Hydraulikmodul erzeugte Drehmoment. kompensiert.

### Stand der Technik

Derzeit geht es bei den hydraulischen Bremsaktoren für Fahrzeuge darum, den Bremsflüssigkeitsbehälter direkt in das Hydraulikmodul, das den Hauptbremszylinder und die Bremspumpe mit elektrischem Aktor umfasst, zu integrieren oder damit zu verbinden.

Der Bremsflüssigkeitsbehälter wird über dem Hydraulikmodul angeordnet und an seiner unteren Basis direkt an die Oberseite des Hydraulikmoduls gekoppelt. Diese Anordnung ermöglicht den direkten Fluss der Bremsflüssigkeit vom Behälter zum Hauptbremszylinder und zur Bremspumpe mit elektrischem Aktor und erleichtert gleichzeitig die Füllung des Bremsflüssigkeitsbehälters in der Fahrzeugmontagestraße.

Der Bremsflüssigkeitsbehälter ist an seiner unteren Basis mit verschiedenen Anschlussnippeln oder -stutzen zur Verbindung des Bremsflüssigkeitsbehälters mit den verschiedenen, vom Hydraulikmodul unabhängigen Bremsflüssigkeitskammern versehen. In bestimmten Fällen sind zwei Nippel erforderlich, wenngleich im Allgemeinen drei Nippel erforderlich sind, zwei für die Primär- bzw. die Sekundärkammer des Hauptbremszylinders und ein weiterer für die Kammer der Bremspupe mit elektrischem Aktor.

Der Behälter muss am Hydraulikmodul zum Vermeiden der Bewegung und Trennung desselben befestigt werden. Diese Befestigung erfolgt durch Verankerungsmittel, die verschiedene Funktionen zu erfüllen haben. In erster Linie müssen sie den Behälter während der gesamten Lebensdauer des Fahrzeugs in der korrekten Montageposition über dem Hydraulikmodul halten. Die Verankerungsmittel müssen außerdem den während der Phase des Füllens der Bremsflüssigkeit in der Fahrzeugmontagestraße resultierenden Beanspruchungen standhalten und eine einfache und schnelle Demontage zum Durchführen von Wartungs-, Reparatur- und Austauscharbeiten ermöglichen.

Gegenwärtig bestehen diese Verankerungsmittel aus zwei verschiedenen Verankerungspunkten an der unteren Basis des Behälters, die mittels zweier Stifte realisiert sind, die den Behälter am Hydraulikmodul befestigen und ihn gleichzeitig über dem Hydraulikmodul bewegungslos im Gleichgewicht halten. Diese aktuelle Lösung weist jedoch aufgrund der zwei Stifte sowie der maschinellen Fertigung der Bohrlöcher und Gewinde, die zur Befestigung beider Stifte im Hydraulikmodul erforderlich sind, den Nachteil erhöhter Gemeinkosten auf.

Eine mögliche Lösung für dieses Problems bestünde in der Realisierung eines an der unteren Basis des Behälters in Längsrichtung zentrierten einzigen Verankerungspunkts mittels eines einzigen Stiftes, der durch eine oder mehrere Laschen der unteren Basis des Behälters in Querrichtung am Hydraulikmodul befestigt wird.

Diese Verankerungsmittel auf der Basis eines einzigen Verankerungspunktes mittels eines an der unteren Basis des Behälters in Längsrichtung zentrierten Stifts weisen jedoch das Problem auf, dass dies nicht genügt, um den Behälter über dem Hydraulikmodul bewegungslos im Gleichgewicht zu halten, da die Dichtungsscheiben der Nippel ein Drehmoment auf den Behälter in Bezug auf die Verankerung ausüben, um die herum es den Behälter in Drehung versetzt. Außerdem erhöht die Kraft, die während der Phase der Einspritzung der Bremsflüssigkeit auf den Einfüllstutzen des Behälters angewendet wird, das auf den Behälter ausgeübte Drehmoment, wodurch die Drehung desselben verstärkt wird.

Zur Lösung dieses Problems könnte der Verankerungspunkt mittels des Stifts mit einer Clipbefestigung der Basis des Behälters am Hydraulikmodul kombiniert werden. Aber auch diese Lösung ist nicht wirksam, da der Behälter aus Propylen hergestellt ist, das aufgrund seiner geringen Steifigkeit kein Material ist, das zur Clipbefestigung geeignet ist. Außerdem müssten komplementäre Clipbefestigungsmittel im Hydraulikmodul maschinell gefertigt werden, was die Herstellungskosten erhöhen würde.

Daher ist ein Bremsflüssigkeitsbehälter für einen hydraulischen Bremsaktor von Fahrzeugen wünschenswert, der eine vollständige und einfache Befestigung desselben am Hydraulikmodul ohne die Nachteile der bereits bestehenden Systeme nach dem Stand der Technik bereitstellt.

Aus der US 2007125080 A1 ist ein Bremsflüssigkeitsbehälter bekannt, welcher bereits über genau einen Verankerungspunkt an einem Hauptbremszylinder befestigt ist. Vom Bremsflüssigkeitsbehälter stehen Nippel ab, über die eine hydraulische Kontaktierung des Bremsflüssigkeitsbehälters mit dem Hauptbremszylinder erfolgt. Die dabei auf den Bremsflüssigkeitsbehälter übertragenen Drehmomente werden von Vorsprüngen am Bremsflüssigkeitsbehälter sowie von Ausgleichsdichtungen welche auf diesen Vorsprüngen angeordnet sind im Gleichgewicht gehalten. Die Vorsprünge wirken dazu mit hohlzylindrisch ausgeführten Stutzen des Hauptbremszylinders zusammen.

### Beschreibung der Erfindung

Die vorliegende Erfindung löst die bestehenden Probleme des Standes der Technik mittels eines Bremsflüssigkeitsbehälters für einen hydraulischen Bremsaktor von Fahrzeugen, der in Anspruch 1 beschrieben wird.

Der Bremsflüssigkeitsbehälter wird an seiner unteren Basis an die Oberseite des Hydraulikmoduls des hydraulischen Bremsaktors gekoppelt.

Der Behälter hat an seiner unteren Basis eine mechanische Verankerung zur Befestigung am Hydraulikmodul. Diese mechanische Verankerung weist einen an der unteren Basis des Behälters in Längsrichtung zentrierten einzigen Verankerungspunkt auf.

Gemäß einer bevorzugten Ausführungsform der Erfindung ist der Verankerungspunkt anhand eines Stiftes realisiert, der durch mindestens eine Befestigungslasche, die an der unteren Basis des Behälters angeordnet ist, in Querrichtung am Hydraulikmodul befestigt wird.

Außerdem weist der Behälter eine Mehrzahl von Anschlussnippeln, die mittels Dichtungsscheiben mit dem Hydraulikmodul verbunden werden können, zum Durchtritt der Bremsflüssigkeit des Behälters zu den verschiedenen Anschlüssen des Hydraulikmoduls an jede der vom Bremsaktor unabhängigen Hydraulikkammern auf. In bestimmten Fällen sind zwei Nippel erforderlich, wenngleich der Behälter vorzugsweise drei Anschlussnippel aufweist. Ein erster Anschlussnippel verbindet den Behälter mit dem ersten Anschluss des Hydraulikmoduls an die Primärkammer des Hauptbremszylinders. Ein zweiter Anschlussnippel verbindet den Behälter mit dem zweiten Anschluss des Hydraulikmoduls an die Sekundärkammer des Hauptbremszylinders. Und ein dritter Anschlussnippel verbindet den Behälter mit dem dritten Anschluss des Hydraulikmoduls an die Kammer der Bremspumpe.

Diese Anschlussnippel mit den Dichtungsscheiben, die sie für ihre korrekte Funktionsweise benötigen, erzeugen ein Drehmoment auf den Behälter in Bezug auf die mechanische Verankerung, das dazu neigt, den Behälter um die mechanische Verankerung herum zu drehen.

Zur Vermeidung dieser Drehung des Behälters und einer Verschiebung seiner Position über dem Hydraulikmodul weist der Behälter eine Ausgleichsdichtung auf, die in einer Aufnahme in seiner unteren Basis in einer derartigen Position angeordnet ist, dass sie ein zusätzliches Drehmoment auf den Behälter in Bezug auf die mechanische Verankerung erzeugt, welches das durch die Mehrzahl von Anschlussnippeln erzeugte Drehmoment kompensiert, derart, dass das Gesamtmoment null ist und keine Drehung in Bezug auf die mechanische Verankerung verursacht, wodurch die Bewegung vermieden und der Behälter daher in der Montageposition über dem Hydraulikmodul gehalten wird.

Vorzugsweise weist der Behälter mindestens einen Befestigungspunkt der Ausgleichsdichtung, der in der Aufnahme derselben angeordnet ist, zur Unterstützung und Befestigung der Ausgleichsdichtung auf. Auf diese Weise wird die Drehung der Dichtung in ihrer Aufnahme vermieden, wodurch mögliches Spiel, Fehlfunktion der Dichtung und selbst der mögliche Austritt derselben aus ihrer Aufnahme vermieden.

Obwohl die Ausgleichsdichtung verschiedene Formen aufweisen kann, ist sie vorzugsweise gleich wie die Anschlussnippel und erfindungsgemäß in der Aufnahme in umgekehrter Position zu den Anschlussnippeln angeordnet, derart, dass sie, statt über die untere Basis des Behälters vorzustehen, wie die Anschlussnippel, innerhalb des Behälters bleibt, wodurch vermieden wird, dass komplementäre Aussparungen oder Aufnahmen in der Oberseite des Hydraulikmoduls angefertigt werden müssen. Dass die Ausgleichsdichtung gleich wie die Anschlussnippel ist, erleichtert die Herstellung derselben.

### Kurze Beschreibung der Zeichnungen

Im Folgenden wird zur Erleichterung des Verständnisses der Erfindung eine Ausführungsform der Erfindung unter Bezugnahme auf eine Reihe von Figuren veranschaulichend und nicht einschränkend beschrieben.

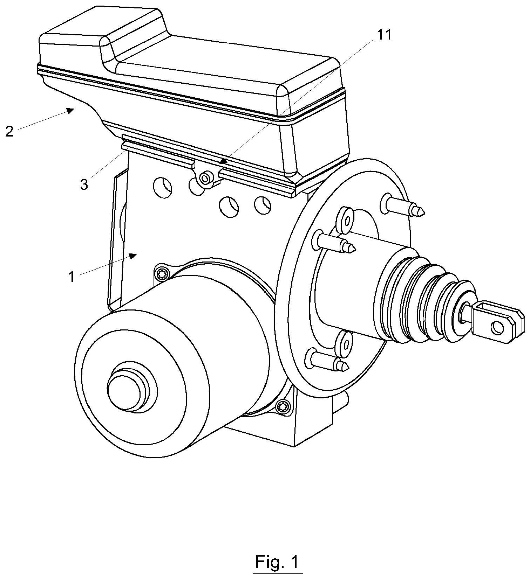

Figur 1 zeigt eine perspektivische Ansicht eines über einem Hydraulikmodul eines hydraulischen Bremsaktors eines Fahrzeugs angeordneten Behälters nach dem Stand der Technik.

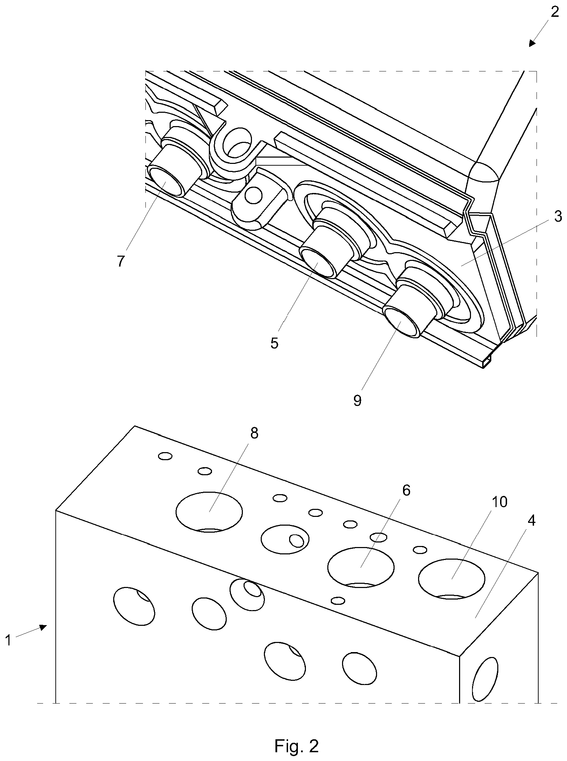

Figur 2 stellt die Verbindung der Anschlussnippel mit dem Hydraulikmodul des Behälters des Standes der Technik von Figur 1 schematisch dar.

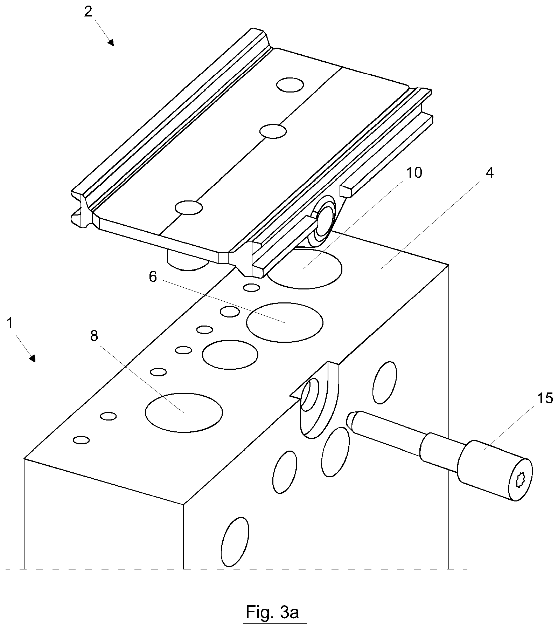

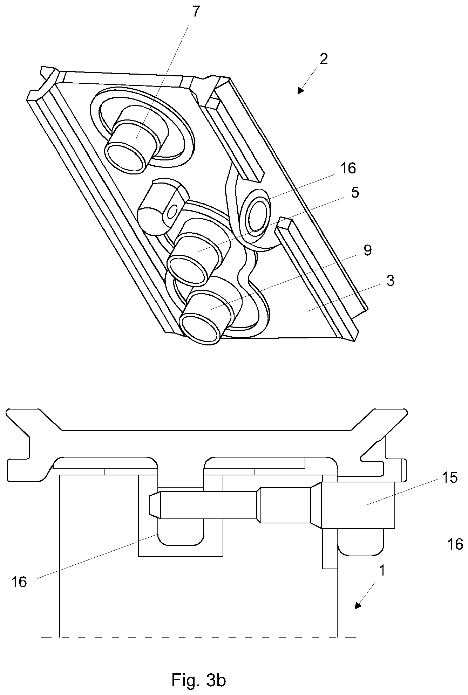

Figur 3a und 3b zeigen eine perspektivische Ansicht eine Ausführungsform der mechanischen Verankerung des Behälters des Standes der Technik der vorstehenden Figuren.
Figur 4a und 4b stellen das Drehmoment, das durch die Anschlussnippel auf den Behälter des Standes der Technik der vorstehenden Figuren ausgeübt wird, schematisch dar.
Figur 5 ist eine perspektivische Ansicht einer Ausführungsform eines Behälters, der Gegenstand der vorliegenden Erfindung ist, und zeigt die Ausgleichsdichtung.
Figur 6 ist eine perspektivische Ansicht einer Ausführungsform eines Behälters, welche die Ausgleichsdichtung und den Befestigungspunkt derselben zeigt.
Figur 7 zeigt ein Detail einer Ausgleichsdichtung in ihrer Aufnahme im Behälter.

In diesen Figuren wird auf einen Satz von Elementen Bezug genommen, wobei es sich um folgende handelt:
1. Hydraulikmodul eines hydraulischen Bremsaktors
2. Bremsflüssigkeitsbehälter
3. untere Basis des Behälters
4. Oberseite des Hydraulikmoduls
5. erster Anschlussnippel des Behälters
6. erster Anschluss des Hydraulikmoduls an die Primärkammer des Hauptbremszylinders
7. zweiter Anschlussnippel des Behälters
8. zweiter Anschluss des Hydraulikmoduls an die Sekundärkammer des Hauptbremszylinders
9. dritter Anschlussnippel des Behälters
10. dritter Anschluss des Hydraulikmoduls an die Kammer der Bremspumpe
11. mechanische Verankerung des Behälters
12. Ausgleichsdichtung des Behälters
13. Aufnahme der Ausgleichsdichtung
14. Befestigungspunkt der Ausgleichsdichtung
15. Stift der mechanischen Verankerung des Behälters
16. Befestigungslaschen für den Stift der mechanischen Verankerung

### Ausführliche Beschreibung der Erfindung

Der Gegenstand der vorliegenden Erfindung ist ein Bremsflüssigkeitsbehälter für einen hydraulischen Bremsaktor von Fahrzeugen.

Wie die Figuren zeigen, ist der Bremsflüssigkeitsbehälter 2 zur Kopplung an seiner unteren Basis 3 an die Oberseite 4 des Hydraulikmoduls 1 des hydraulischen Bremsaktors ausgelegt.

Der Behälter 2 hat an seiner unteren Basis 3 eine mechanische Verankerung 11 zu seiner Befestigung am Hydraulikmodul 1. Die mechanische Verankerung 11 weist einen an der unteren Basis 3 des Behälters 2 in Längsrichtung zentrierten einzigen Verankerungspunkt auf.

Die Figuren zeigen, wie die mechanische Verankerung 11 des Behälters 2 vorzugsweise einen Stift 15 aufweist, der durch mindestens eine Befestigungslasche 16 (die auch zwei oder mehr sein könnten), die an der unteren Basis 3 des Behälters 2 angeordnet ist, in Querrichtung am Hydraulikmodul 1 befestigt wird.

Nachdem die Erfindung auf verständliche Weise beschrieben wurde, wird darauf hingewiesen, dass die vorstehend beschriebenen, konkreten Ausführungsformen für Modifikationen im Detail empfänglich sind, vorausgesetzt, dass sie die Grundlagen und das Wesen der Erfindung nicht verändern.

Wie in den Figuren zu erkennen ist, weist der Behälter außerdem eine Mehrzahl von Nippeln 5, 7, 9 auf, die mittels Dichtungsscheiben mit dem Hydraulikmodul 1 verbunden werden können, zum Durchtritt der Bremsflüssigkeit des Behälters zu den verschiedenen Anschlüssen des Hydraulikmoduls 1 an jede der vom Bremsaktor unabhängigen Kammern.

Gemäß einer bevorzugten Ausführungsform, die in den Figuren dargestellt ist, weist der Behälter 2 drei Anschlussnippel 5, 7, 9 auf. Ein erster Anschlussnippel 5 verbindet den Behälter 2 mit dem ersten Anschluss 6 des Hydraulikmoduls 1 an die Primärkammer des Hauptbremszylinders. Ein zweiter Anschlussnippel 7 verbindet den Behälter 2 mit dem zweiten Anschluss 8 des Hydraulikmoduls 1 an die Sekundärkammer des Hauptbremszylinders. Und ein dritter Anschlussnippel 9 verbindet den Behälter 2 mit dem dritten Anschluss 10 des Hydraulikmoduls 1 an die Kammer der Bremspumpe.

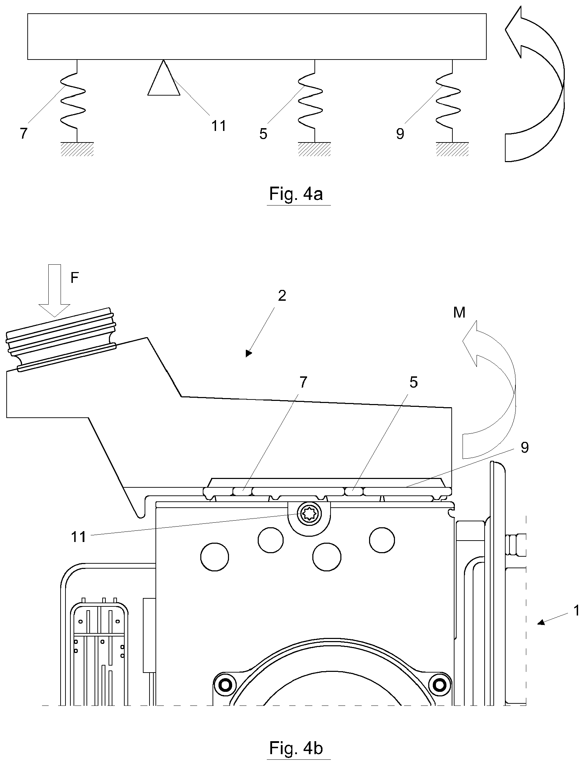

Diese Nippel 5, 7, 9 erzeugen ein Drehmoment auf den Behälter 2 in Bezug auf die mechanische Verankerung 11, wie in Figur 4a und 4b in schematischer Form zu erkennen ist. Dieses Drehmoment neigt dazu, den Behälter 2 um die mechanische Verankerung 11 herum zu drehen, was zu Instabilität und Verschiebung des Behälters 2 von seiner Position über dem Hydraulikmodul 1 führen kann.

Um diese Drehung des Behälters 2 zu vermeiden, weist er gemäß der vorliegenden Erfindung eine Ausgleichsdichtung 12 auf, die in einer Aufnahme 13 seiner unteren Basis 3 in einer derartigen Position angeordnet ist, dass sie ein zusätzliches Drehmoment auf den Behälter 2 in Bezug auf die mechanische Verankerung 11 erzeugt, welches das durch die Anschlussnippel 5, 7, 9 erzeugte Drehmoment kompensiert.

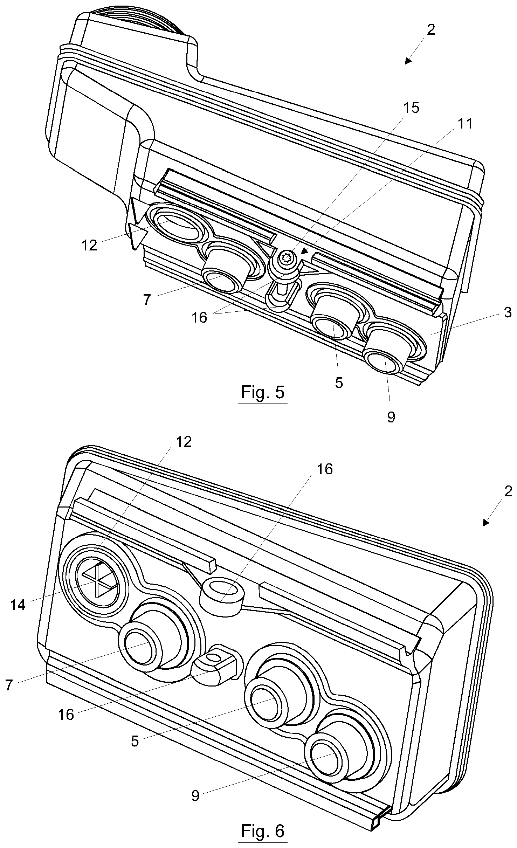

Wie in Figur 6 zu erkennen ist, weist der Behälter 2 gemäß einer bevorzugten Ausführungsform der Erfindung mindestens einen Befestigungspunkt 14 der Ausgleichsdichtung 12 zur Unterstützung und Befestigung der Ausgleichsdichtung 12 in der Aufnahme 13 derselben angeordnet auf, um so ihre Drehung innerhalb der Aufnahme zu vermeiden.

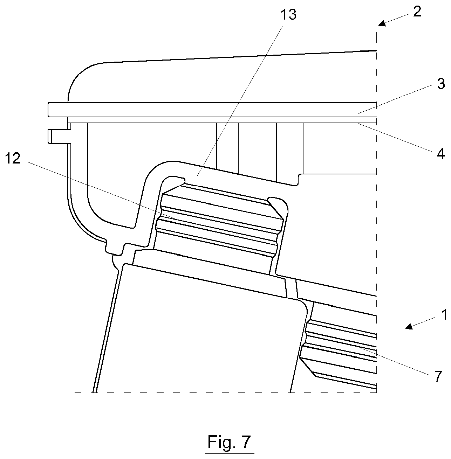

Vorzugsweise ist die Ausgleichsdichtung 12 gleich wie die Anschlussnippel 5, 7, 9, wenngleich sie erfindungsgemäß in der Aufnahme 13 in umgekehrter Position zu jener der Anschlussnippel 5, 7, 9 angeordnet ist. Auf diese Weise bleibt die Ausgleichsdichtung 12 im Inneren, statt über die untere Basis 3 des Behälters 2 vorzustehen, wie dies die Anschlussnippel 5, 7, 9 tun, wodurch maschinell gefertigte Aussparungen oder zusätzliche Aufnahmen in der Oberseite 4 des Hydraulikmoduls 1 vermieden werden. Außerdem erleichtert die Tatsache, dass die sie gleich wie die Anschlussnippel 5, 7, 9 sind, ihre Herstellung. Figur 7 zeigt diese Ausgleichsdichtung in umgekehrter Position zu jener der Anschlussnippel 5, 7, 9 im Detail.

## Patentansprüche

1. Bremsflüssigkeitsbehälter für hydraulischen Bremsaktor von Fahrzeugen, der zur Kopplung an seiner unteren Basis (3) an die Oberseite (4) des Hydraulikmoduls (1)
des hydraulischen Bremsaktors ausgelegt ist, wobei der Bremsflüssigkeitsbehälter (2) an seiner unteren Basis (3) umfasst:
- eine mechanische Verankerung (11), die zum Befestigen des Bremsflüssigkeitsbehälters (2) am Hydraulikmodul (1) ausgelegt ist und einen einzigen Verankerungspunkt umfasst, der an der unteren Basis (3) des Bremsflüssigkeitsbehälters (2) in Längsrichtung zentriert ist, und
- eine Mehrzahl von Anschlussnippeln (5, 7, 9), die mittels Dichtungsscheiben, die ein Drehmoment auf den Bremsflüssigkeitsbehälter (2) in Bezug auf die mechanische Verankerung (11) erzeugen, mit dem Hydraulikmodul (1) verbunden werden können,
wobei der Bremsflüssigkeitsbehälter (2) **dadurch gekennzeichnet ist, dass** er eine Ausgleichsdichtung (12) umfasst, die in einer Aufnahme (13) seiner unteren Basis (3) in einer derartigen Position angeordnet ist, dass sie ein zusätzliches Drehmoment auf den Bremsflüssigkeitsbehälter (2) in Bezug auf die mechanische Verankerung (11) erzeugt, welches das durch die Mehrzahl von Anschlussnippeln (5, 7, 9) erzeugte Drehmoment kompensiert,
wobei die Ausgleichsdichtung (12) in der Aufnahme (13) in umgekehrter Position zu jener der Anschlussnippel angeordnet ist, damit sie im Inneren bleibt, statt über die untere Basis (3) des Bremsflüssigkeitsbehälters (2) vorzustehen.

2. Bremsflüssigkeitsbehälter für hydraulischen Bremsaktor von Fahrzeugen nach Anspruch 1, **dadurch gekennzeichnet, dass** er mindestens einen Befestigungspunkt (14) der Ausgleichsdichtung (12) in der Aufnahme (13) angeordnet aufweist, der zur Unterstützung und Befestigung der Ausgleichsdichtung (12) ausgelegt ist.

3. Bremsflüssigkeitsbehälter für hydraulischen Bremsaktor von Fahrzeugen nach einem der vorhergehenden Ansprüche, **dadurch gekennzeichnet, dass** die Ausgleichsdichtung (12) gleich wie die Anschlussnippel (5, 7, 9) und in der Aufnahme (13) in umgekehrter Position zu jener der Anschlussnippel (5, 7, 9) angeordnet ist.

4. Bremsflüssigkeitsbehälter für hydraulischen Bremsaktor von Fahrzeugen nach einem der vorhergehenden Ansprüche, **dadurch gekennzeichnet, dass** die Anschlussnippel, die mit dem Hydraulikmodul verbunden werden können, umfassen:
- einen ersten Anschlussnippel (5), der mit dem ersten Anschluss (6) des Hydraulikmoduls (1) an die Primärkammer des Hauptbremszylinders verbunden werden kann,
- einen zweiten Anschlussnippel (7), der mit dem zweiten Anschluss (8) des Hydraulikmoduls (1) an die Sekundärkammer des Hauptbremszylinders verbunden werden kann, und
- einen dritten Anschlussnippel (9), der mit dem dritten Anschluss (10) des Hydraulikmoduls (1) an die Kammer der Bremspumpe verbunden werden kann.

5. Bremsflüssigkeitsbehälter für hydraulischen Bremsaktor von Fahrzeugen nach einem der vorhergehenden Ansprüche, **dadurch gekennzeichnet, dass** die mechanische Verankerung (11) des Behälters (2) umfasst:
- einen Stift (15), der ausgelegt ist, um in Querrichtung am Hydraulikmodul (1) befestigt zu werden durch
- mindestens eine Befestigungslasche (16), die an der unteren Basis (3) des Behälters (2) angeordnet ist.

## Claims

1. Brake fluid reservoir for a hydraulic brake actuator of vehicles, which brake fluid reservoir is designed on its lower base (3) for coupling to the upper side (4) of the hydraulic module (1) of the hydraulic brake actuator, the brake fluid reservoir (2) comprising, on its lower base (3):
- a mechanical anchoring means (11) which is designed for fastening the brake fluid reservoir (2) to the hydraulic module (1) and comprises a single anchoring point which is centred in the longitudinal direction on the lower base (3) of the brake fluid reservoir (2), and
- a plurality of connector nipples (5, 7, 9) which can be connected to the hydraulic module (1) by means of sealing washers which generate a torque on the brake fluid reservoir (2) in relation to the mechanical anchoring means (11),
the brake fluid reservoir (2) being **characterized in that** it comprises a shim (12) which is arranged in a receptacle (13) of its lower base (3) in a position which is such that it generates an additional torque on the brake fluid reservoir (2) in relation to the mechanical anchoring means (11), which additional torque compensates for the torque which is generated by way of the plurality of connector nipples (5, 7, 9),
the shim (12) being arranged in the receptacle (13) in a reversed position with respect to that of the connector nipples, in order that it remains in the interior instead of projecting beyond the lower base (3) of the brake fluid reservoir (2).

2. Brake fluid reservoir for a hydraulic brake actuator of vehicles according to Claim 1, **characterized in that** it has at least one fastening point (14) of the shim (12) arranged in the receptacle (13), which at least one fastening point (14) is designed to support and fasten the shim (12).

3. Brake fluid reservoir for a hydraulic brake actuator of vehicles according to either of the preceding claims, **characterized in that** the shim (12) is arranged in an identical manner to the connector nipples (5, 7, 9) and in the receptacle (13) in a reversed position with respect to that of the connector nipples (5, 7, 9).

4. Brake fluid reservoir for a hydraulic brake actuator of vehicles according to one of the preceding claims, **characterized in that** the connector nipples which can be connected to the hydraulic module comprise:
- a first connector nipple (5) which can be connected by way of the first connector (6) of the hydraulic module (1) to the primary chamber of the brake master cylinder,
- a second connector nipple (7) which can be connected by way of the second connector (8) of the hydraulic module (1) to the secondary chamber of the brake master cylinder, and
- a third connector nipple (9) which can be connected by way of the third connector (10) of the hydraulic module (1) to the chamber of the brake pump.

5. Brake fluid reservoir for a hydraulic brake actuator of vehicles according to one of the preceding claims, **characterized in that** the mechanical anchoring means (11) of the reservoir (2) comprises:
- a pin (15) which is designed to be fastened to the hydraulic module (1) in the transverse direction by way of
- at least one fastening clip (16) which is arranged on the lower base (3) of the reservoir (2).

## Revendications

1. Contenant de liquide de frein pour actionneur de frein hydraulique de véhicules, qui est adapté pour être couplé, sur sa base inférieure (3), au côté supérieur (4) du module hydraulique (1) de l'actionneur de frein hydraulique, le contenant de liquide de frein (2) comprenant sur sa base inférieure (3) :
- un ancrage mécanique (11), qui est adapté pour fixer le contenant de liquide de frein (2) au module hydraulique (1) et comprend un point d'ancrage unique, qui est centré dans la direction longitudinale sur la base inférieure (3) du contenant de liquide de frein (2), et
- une pluralité de manchons de raccordement (5, 7, 9), qui peuvent être reliés au module hydraulique (1) au moyen de rondelles d'étanchéité qui génèrent un couple sur le contenant de liquide de frein (2) par rapport à l'ancrage mécanique (11),
le contenant de liquide de frein (2) étant **caractérisé en ce que en ce qu'**il comprend un joint d'équilibrage (12), qui est agencé dans un logement (13) de sa base inférieure (3) dans une position telle qu'il génère un couple supplémentaire sur le contenant de liquide de frein (2) par rapport à l'ancrage mécanique (11), qui compense le couple généré par la pluralité de manchons de raccordement (5, 7, 9),
le joint d'équilibrage (12) étant agencé dans le logement (13) en position inverse de celle des manchons de raccordement, de manière à rester à l'intérieur au lieu de faire saillie au-dessus de la base inférieure (3) du contenant de liquide de frein (2).

2. Contenant de liquide de frein pour actionneur de frein hydraulique de véhicules selon la revendication 1, **caractérisé en ce qu'**il présente au moins un point de fixation (14) du joint d'équilibrage (12) agencé dans le logement (13), qui est adapté pour supporter et fixer le joint d'équilibrage (12).

3. Contenant de liquide de frein pour actionneur de frein hydraulique de véhicules selon l'une quelconque des revendications précédentes, **caractérisé en ce que** le joint d'équilibrage (12) est identique aux manchons de raccordement (5, 7, 9) et est agencé dans le logement (13) en position inverse de celle des manchons de raccordement (5, 7, 9).

4. Contenant de liquide de frein pour actionneur de frein hydraulique de véhicules selon l'une quelconque des revendications précédentes, **caractérisé en ce que** les manchons de raccordement qui peuvent être reliés au module hydraulique comprennent :
- un premier manchon de raccordement (5), qui peut être relié avec le premier raccord (6) du module hydraulique (1) à la chambre primaire du maître-cylindre de frein,
- un deuxième manchon de raccordement (7), qui peut être relié avec le deuxième raccord (8) du module hydraulique (1) à la chambre secondaire du maître-cylindre de frein, et
- un troisième manchon de raccordement (9), qui peut être relié avec le troisième raccord (10) du module hydraulique (1) à la chambre de la pompe de frein.

5. Contenant de liquide de frein pour actionneur de frein hydraulique de véhicules selon l'une quelconque des revendications précédentes, **caractérisé en ce que** l'ancrage mécanique (11) du contenant (2) comprend :
- une tige (15), qui est adaptée pour être fixée dans la direction transversale au module hydraulique (1) par
- au moins une patte de fixation (16), qui est agencée sur la base inférieure (3) du contenant (2).
